# EUROPÄISCHE PATENTANMELDUNG

(11) **EP 1 158 286 A2**
(43) Veröffentlichungstag der Anmeldung: **28.11.2001**
(21) Anmeldenummer: 01111384.2
(22) Anmeldetag: 10.05.2001
(51) Int. Cl.: G01M 3/00, G01M 15/00

(54) **Verfahren zur zylinderselektiven Dichtigkeitsprüfung der Brennräume einer Brennkraftmaschine**

(30) Priorität: 25.05.2000 DE 10025846
(71) Anmelder: AFT Atlas Fahrzeugtechnik GmbH, 58791 Werdohl (DE)
(72) Erfinder: Burkardt, Dietrich, 58809 Neuenrade (DE); Finger, Lutz, 58095 Hagen (DE); Oster, Roland, 38550 Isenbüttel (DE)
(74) Vertreter: Mader, Wilfried

(57) **Zusammenfassung**

Die Erfindung betrifft ein Verfahren zur zylinderselektiven Dichtigkeitsprüfung der Brennräume einer Brennkraftmaschine während dem Motorbetrieb bei unterdrücktem Verbrennungsprozeß, bei dem aus dem Verlauf einer Motorwellendrehzahl für jeden Zylinder Motorwellendrehzahidifferenzen gebildet werden, denen ein Wert für den Verdichtungsdruck zugeordnet wird.

## Beschreibung

Die Erfindung betrifft ein Verfahren zur zylinderselektiven Dichtigkeitsprüfung der Brennräume von Brennkraftmaschinen während dem Motorbetrieb bei unterdrücktem Verbrennungsprozeß, wie es aus der DE 197 34 680 A1 bekannt ist.

Ein Motorbetrieb bei unterdrücktem Verbrennungsprozeß liegt beispielsweise während dem Start der Brennkraftmaschine mit einem elektrischen Anlaser ohne Kraftstoffzufuhr und ohne Fremdzündung vor, oder wenn ein Kraftfahrzeug auf abschüssigen Strecken mit eingekuppeltem Motor und mit einer aktivierten Schubabschaltung rollt.

Eine Vorrichtung zur Auswertung der Verdichtung eines mehrzylindrigen Verbrennungsmotors mit einem gattungsgemäßen Verfahren ist beispielsweise aus der DE 43 37 720 A1 bekannt. Bei diesem Verfahren wird ein Signal ausgewertet, das proportional zum Anlasserstrom während dem Start der Brennkraftmaschine ist. Dabei wird der signifikante Anstieg des benötigten Anlasserstromes bei der Kompression des Gasgemisches während dem Verdichtungstakt eines Zylinders bewertet. Weist ein Zylinder eine irgendwie geartete Undichtigkeit auf, ist dies durch die Abnahme des üblicherweise aufzuwendenden Anlasserstromes detektierbar.

Diese Methode der Dichtigkeitsprüfung der Brennräume ist bei den Brennkraftmaschinen mit Elektrostarter sinnvoll, die nicht über Mittel zur Erfassung des Kurbelwellendrehwinkels und zur Bestimmung der momentanen Kurbelwellendrehzahl verfügen.

Der Nachteil dieses Verfahrens besteht darin, daß die Dichtigkeitsprüfung der Brennräume nur bei der Kompression des Gasgemisches während dem Verdichtungstakt der Zylinder der Brennkraftmaschine erfolgen kann. Zudem sind die für die Anlasserstrommessung notwendigen Komponenten nur für die Dichtigkeitsprüfung selbst nutzbar, wodurch diese Methode der Dichtigkeitsprüfung aufwendig und teuer ist.

Aus der Gattungsbildenden DE 197 34 680 A1 ist ein Verfahren zur zylinderselektiven Dichtigkeitsprüfung der Brennräume von Brennkraftmaschinen mit Mitteln zur Erfassung des Kurbelwellendrehwinkels und zur Bestimmung der momentanen Kurbelwellendrehzahl während dem Motorbetrieb bei unterdrücktem Verbrennungsprozeß bekannt, bei dem während dem Verdichtungs- und/oder Verbrennungstakt der Zylinder der Brennkraftmaschine aus dem Kurvenverlauf der momentanen Kurbelwellendrehzahlen Kenngrößen abgeleitet werden, die mit dem Kompressionsdruck in den Brennräumen der Zylinder korreliert sind, wodurch Mängel in der Dichtigkeit der Brennräume der Brennkraftmaschine zylinderselektiv erkannt werden.

Der Nachteil dieses Verfahrens besteht darin, daß die Aussage über den zylinderselektiven Kompressionsdruck nur im Vergleich der Zylinder untereinander getroffen werden kann. Dabei wird diese Aussage durch unvermeidliche Quereinflüsse jeder Kenngrößen zwischen den Brennräumen verfälscht. Derartige Quereinflüsse entstehen beispielsweise dadurch, daß bei einer Undichtigkeit eines Brennraumes die Drehung der Kurbelwelle weniger verzögert wird, und dadurch der anschließend zu komprimierende Brennraum mit einer höheren Kurbelwellendrehzahl verdichtet wird. Eine Beurteilung der Ursache der Undichtigkeit eines Brennraumes ist damit nicht möglich.

Dazu kommt, daß das Verfahren bei Brennkraftmaschinen mit lediglich einem Brennraum nicht anwendbar ist.

Der Erfindung liegt die Aufgabe zugrunde, ein verbessertes Verfahren zur Dichtigkeitsprüfung der Brennräume einer Brennkraftmaschinen anzugeben, durch das der Kompressionsdruck in den Brennräumen direkt bestimmt werden kann, wobei Quereinflüsse zwischen den Brennräumen kompensiert werden, und das auch für Brennkraftmaschinen mit einem Brennraum verwendet werden kann.

Diese Aufgabe wird erfindungsgemäß durch die Merkmale in Kennzeichen des Patentanspruchs 1 gelöst. Dabei werden für jeden Zylinder der Brennkraftmaschine aus den Motorwellendrehwinkeln momentane Motorwellendrehzahlen bestimmt. Dabei ist die Drehung der Motorwelle in eine begrenzte Anzahl von Winkelsegmenten unterteilt, wodurch eine der Anzahl von Winkelsegmenten entsprechende Anzahl von Motorwellendrehzahlen bestimmt werden kann. Dadurch ändert sind die Kurbelwellendrehzahl lediglich von einem Winkelsegment zum nächsten, innerhalb eines Winkelsegmentes wird die Motorwellendrehzahl als konstant angenommen.

Anschließend werden aus dem Verlauf der Motorwellendrehzahlen für jeden Zylinder Motorwellendrehzahldifferenzen bestimmt. Dafür kann vorteilhaft die Zunahme der Motorwellendrehzahl nach dem überschreiten des oberen Totpunktes eines Zylinders verwendet werden.

Diesen Motorwellendrehzahldifferenzen wird jeweils eine Kennzahl zugeordnet, die vorzugsweise jeweils als prozentualer Anteil der Motorwellendrehzahldifferenz eines Zylinders im Bezug auf die höchste bestimmte Motorwellendrehzahldifferenz aller Zylinder gebildet wird.

Diesen Kennzahlen wird der Wert des Verdichtungsdrucks zugeordnet, wobei der maximale Verdichtungsdruck dem nominellen Verdichtungsverhältnisses unter Normalbedingungen entspricht.

Die für jeden Zylinder der Brennkraftmaschine bestimmen Verdichtungsdrücke werden mit einem vorgegebenen Schwellwert verglichen, gegebenenfalls mit einem zylinderspezifisch vorgegebenen Schwellwert, wobei bei einem unterschreiten des Schwellwertes eine Fehlersignal ausgegeben wird.

Bevor die Dichtigkeitsprüfung der Brennräume der Brennkraftmaschine durchgeführt wird, ist vorgesehen, daß eine Prüfung auf Einhaltung von die Dichtigkeitsprüfung voraussetzenden Randbedingungen durchgeführt wird. Eine derartige Randbedingung ist beispielsweise eine minimale Motorwellendrehzahl, ab der die zuverlässige Bestimmung des Verdichtungsdruckes aus einer Motorwellendrehzahldifferenz möglich ist.

Die Motorwellendrehzahldifferenz eines Zylinders wird bestimmt, indem der Wert der maximalen momentanen Motorwellendrehzahl nach dem oberen Totpunkt des Zylinders minus der momentanen Motorwellendrehzahl direkt nach dem oberen Totpunkt des selben Zylinders der Brennkraftmaschine gebildet wird.

Zur Verbesserung der Auswertegenauigkeit werden die Motorwellendrehzahldifferenzen der Zylinder bezüglich dieser mittleren Motorwellendrehzahlen der Drehwinkelsegmente entsprechend applizierbaren Kennlinien/Kennfeldern oder einem Algorithmus korrigiert.

Zudem werden die zylinderspezifischen Motorwellendrehzahldifferenzen bezüglich der Motortemperatur mittels applizierbaren Kennlinien korrigiert.

Bei Brennkraftmaschinen mit mehreren Zylindern wird die Motorwellendrehzahldifferenz des in der Zündfolge nächsten Zylinders in Abhängigkeit der Motorwellendrehzahldifferenz des in der Zündfolge letzten Zylinders korrigiert.

In einer Weiterbildung der Erfindung ist vorgesehen, daß die Verdichtungsdrücke der Zylinder und/oder die zylinderselektiven Motorwellendrehzahldifferenzen und/oder die Kennzahlen für Vergleichszwecke nach der Herstellung der Brennkraftmaschine, nach einer Reparatur oder nach beliebigen Intervallen gespeichert werden.

In einer weiteren Weiterbildung der Erfindung ist vorgesehen, daß Unregelmäßigkeiten der Verdichtungsdrücke der Brennräume der Brennkraftmaschine beispielsweise an der Instrumententafel eines Kraftfahrzeugs angezeigt werden.

Zur Konditionierung der Brennkraftmaschine ist vorgesehen, daß vor dem Beginn der Erfassung der momentanen Motorwellendrehzahlen die Brennkraftmaschine beispielsweise ein Arbeitsspiel, entsprechend 720° Kurbelwellendrehung, durchläuft.

Als Motorwellendrehzahl können beispielsweise die Kurbelwellendrehzahl, die Nokkenwellendrehzahl oder die Anlasserwellendrehzahl verwendet werden.

In einer letzten Weiterbildung der Erfindung ist vorgesehen, daß das Verfahren zur Dichtigkeitsprüfung bei Brennkraftmaschinen mit lediglich einem Zylinder verwendet wird, wobei die Motorwellendrehzahldifferenz mit einer gespeicherten Motordrehzahldifferenz verglichen wird.

Im folgenden ist das Verfahren zur zylinderselektiven Dichtigkeitsprüfung am Beispiel einer achtzylindrigen Brennkraftmaschine, bei der als Motorwellendrehzahl die Kurbelwellendrehzahl bestimmt wird, im Zusammenhang mit zwei Zeichnungen dargestellt und erläutert.

Es zeigen:
- Figur 1: einen typischen Kurvenverlauf der momentanen Kurbelwellendrehzahlen der achtzylindrigen Brennkraftmaschine über 720 Grad Kurbelwellendrehwinkel, wobei der Zylinder 1 eine Undichtigkeit aufweist.
- Figur 2: ein Ablaufdiagramm zur Durchführung der zylinderselektiven Verdichtungsdedektion.

Die zylinderselektive Dichtigkeitsprüfung erfolgt beim Start der Brennkraftmaschine, bei der die Brennstoffzuführung und die Zündung unterdrückt bleibt, und bei dem ein Elektromotor die Drehzahl n der Kurbelwelle auf zwischen 150 und 250 Umdrehungen pro Minute beschleunigt. Die Schwankung der Kurbelwellendrehzahl n resultiert bei einer nach dem Viertaktprinzip arbeitenden Brennkraftmaschine aus dem Verdichtungstakt, bei dem ein Kolben bei geschlossenen Gaswechselventilen das in den Brennräumen befindliche Gasgemisch auf ca. ein zehntel des Volumens verdichtet. Dadurch nimmt die Kurbelwellendrehzahl n bis zum oberen Totpunkt hin ab, um danach durch das wieder expandierende Gasgemisch zuzunehmen.

Zur Bestimmung der momentanen Kurbelwellendrehzahl n ist die Kurbelwelle mit einer Meßvorrichtung und einem zugehörigen Steuergerät ausgestattet.

Die Meßvorrichtung besteht aus einem mit der Kurbelwelle umlaufenden Geberrad, das mit 36 Markierungen und einer Zusatzmarkierung versehen ist, die von einem Induktivsensor abgetastet werden. Aus den Signalen des Induktivsensors ermittelt das Steuergerät bei einer Kurbelwellenumdrehung 36 momentane Kurbelwellendrehzahlen n. Die Zusatzmarkierung kennzeichnet eine dem Steuergerät bekannte Winkelposition der Kurbelwelle im Arbeitsspiel x der Brennkraftmaschine, z.B. den oberen Totpunkt des Zylinders i₌₁.

Durch die Markierungen wird eine Kurbelwellendrehung in 36 gleiche Segmente aufgeteilt, wobei der Induktivsensor die Zeitspanne zwischen zwei Segmenten erfaßt. Die Kurbelwellendrehzahl n ändert sich dadurch für das Steuergerät nur von einem Segment zum nächsten Segment, innerhalb eines Segmentes wird die Kurbelwellendrehzahl n als konstant angenommen. Dem Steuergerät steht damit die Information über die Kurbelwellendrehzahl n und den Kurbelwellendrehwinkel mit einer Auflösung von 10 Grad zur Verfügung.

Für die eindeutige Zuordnung des sich periodisch wiederholenden, zwei Kurbelwellenumdrehungen umfassenden Arbeitsspiels x einer Brennkraftmaschine zum Kurbelwellendrehwinkel ist die Nockenwelle mit einer weiteren Meßvorrichtung versehen, die die Erfassung des Nockenwellendrehwinkels ermöglicht.

Der Signalgeber der weiteren Meßvorrichtung der Nockenwelle besteht aus einem mit der Nockenwelle umlaufenden Geberrad, das mit 12 Markierungen und einer Zusatzmarkierung versehen ist, die ebenfalls von einem Induktivsensor abgetastet werden. Die Zusatzmarkierung kennzeichnet eine dem Steuergerät bekannte Winkelposition der Nockenwelle. Aus den Signalen dieses Induktivsensors kann das Steuergerät die Nockenwellendrehzahl und den Nockenwellendrehwinkel mit einer Auflösung von 30 Grad ermitteln.

Durch die Meßvorrichtung der Kurbelwelle und die weitere Meßvorrichtung der Nokkenwelle kann das Steuergerät ein Ereignis im sich periodisch alle zwei Kurbelwellenumdrehungen wiederholenden Arbeitsspiel x der Brennkraftmaschine einer Veränderung der momentanen Kurbelwellendrehzahl n zuordnen. Beispielsweise kann das Steuergerät eine Erhöhung der Kurbelwellendrehzahl n der Expansion des Zylinders i=3 zuordnen.

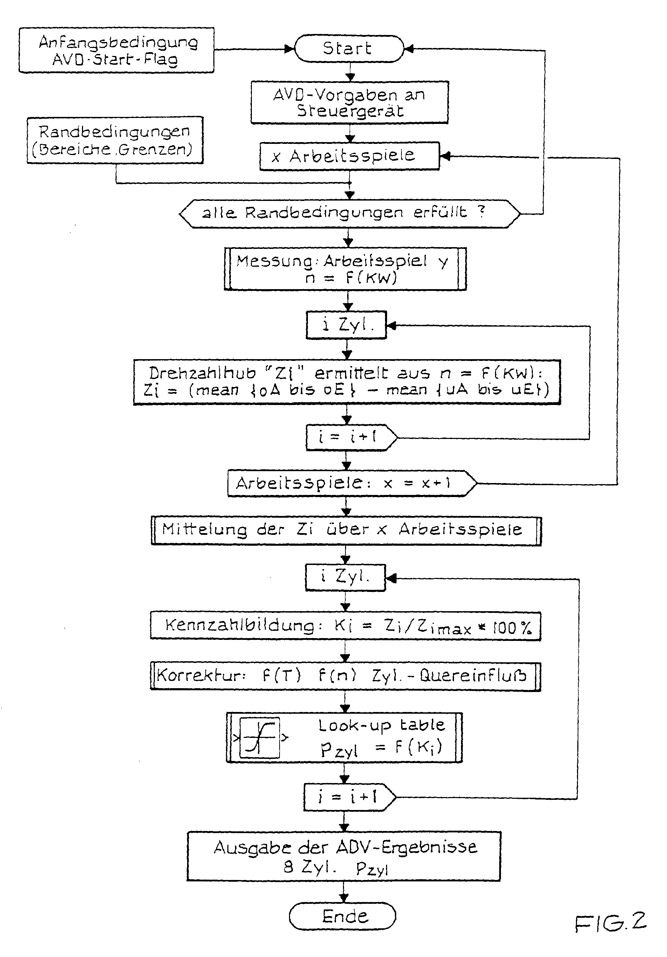

Die automatische Verdichtungsdedektion AVD der Brennräume muß nicht zwingend bei jeder Inbetriebnahme der Brennkraftmaschine erfolgen. Sie kann beispielsweise nach dem erreichen einer festgelegten Betriebsdauer der Brennkraftmaschine, nach festen Zeitintervallen oder nachdem sie manuelle Initiiert wurde durchgeführt werden. Zur Durchführung der automatischen Verdichtungsdedektion wird im Steuergerät das Flag <AVD-Start> gesetzt, wonach das in der Figur 2 dargestellte Flußdiagramm durchlaufen wird.

Nach dem Start der automatischen Verdichtungsdedektion werden zunächst von dem Steuergerät applizierbare Vorgaben ausgeführt. Beispielsweise wird bei einem Dieselmotor mit Common-Rail-Direkteinspritzung der Raildruck auf Null gesetzt, wodurch ein Austreten von Dieselkraftstoff in die Brennräume auch bei undichten Kraftstoffinjektoren nicht erfolgt.

Um eine aussagekräftige Dichtigkeitsprüfung der Brennräume durchführen zu können, durch die für jeden Zylinder i der Verdichtungsdruck P_{zyl} in Bar ausgegeben werden kann, müssen Randbedingungen eingehalten werden, die für jede Brennkraftmaschine genau spezifiziert werden müssen.

Dazu gehören beispielsweise eine minimale und eine maximale Kurbelwellendrehzahl n beim Anlasserschleppbetrieb, eine minimale Temperatur des Motoröls, eine minimale Batteriespannung sowie die Unterdrückung der Kraftstoffzufuhr. Dazu muß die Brennkraftmaschine über Sensoren zur Bestimmung der Öltemperatur, der Batteriespannung und der Kraftstoffzufuhr verfügen. Liegt eine der motorspezifischen Randbedingungen außerhalb eines applizierbaren Schwellwertes wird die Dichtigkeitsprüfung der Brennräume nicht durchgeführt, da der daraufhin durchgeführte Dichtigkeitsprüfung zu fehlerbehaftet sein könnte.

Zur Prüfung der Randbedingungen mittels der Sensoren und zur allgemeinen Konditionierung der Brennkraftmaschine wird vor der Bestimmung des Verdichtungsdrukkes P_{zyl} die Kurbelwelle durch den Anlasser zwei mal (720° Kurbelwellendrehwinkel = ein Arbeitsspiel x der Brennkraftmaschine) gedreht. Dadurch werden Einflüsse durch das Beschleunigen der rotierenden und oszillierenden Motorteile auf die Bestimmung einer Motordrehzahl vermieden. Zudem setzt durch den sich aufbauenden Öldruck die Schmierung der Brennkraftmaschine ein, wodurch ebenfalls Fehler bei der Bestimmung der Motordrehzahl vermieden werden.

Werden diese Randbedingungen nicht erfüllt wird der Start der automatischen Verdichtungsdedektion erneut initiiert.

Sind die Randbedingungen erfüllt setzt die Erfassung der Kurbelwellendrehzahlen n zur Bestimmung des Verdichtungsdruckes P_{zyl} der Brennräume ein.

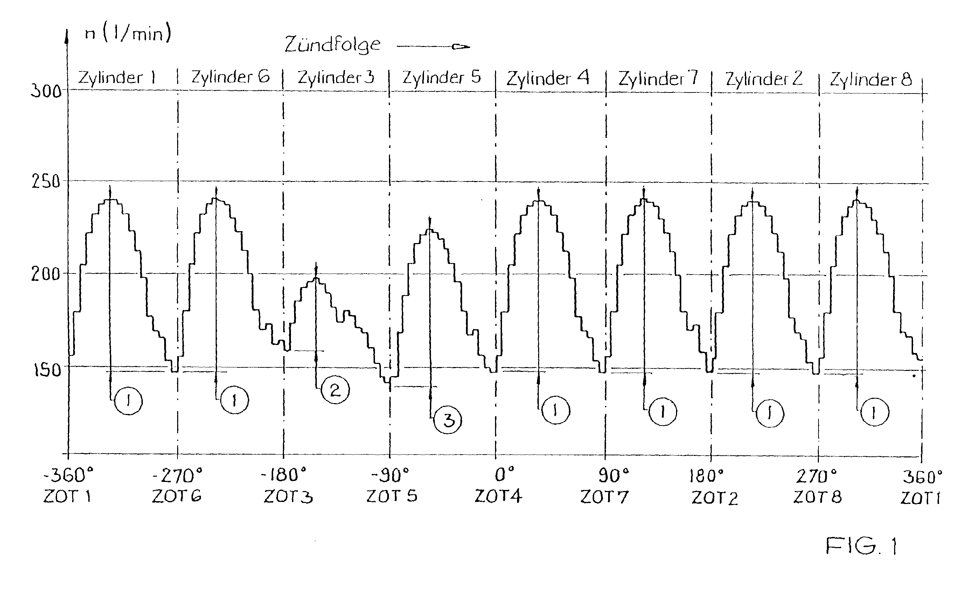

Nach mindestens einem weiteren Arbeitsspiel x der Brennkraftmaschine (=720° Kurbelwellendrehwinkel) hat jeder Zylinder i alle vier Arbeitstakte durchlaufen und es wurden 72 momentanen Kurbelwellendrehzahlen n erfaßt. Ein derartiger Drehzahlverlauf ist in der Figur 1 wiedergegeben. Aus dem Verlauf der Kurbelwellendrehzahlen n ist zu erkennen, daß die Kurbelwellendrehzahl n nach dem oberen Totpunkt jedes Zylinders i ein Minimum aufweist, und darauf im Verlauf ein Maximum folgt. Diese Motorwellendrehzahldifferenz bzw. dieser Drehzahlhub Zᵢ der Kurbelwellendrehzahl n, die Differenz aus dem Maximum nach dem oberen Totpunkt und dem Minimum unmittelbar nach dem oberen Totpunkt eines Zylinders i, wird als Maß zur Bestimmung der Dichtheit der Brennräume genutzt.

Zur Erhöhung der Auswertegenauigkeit werden mehrere Arbeitsspiele x, beispielsweise drei Arbeitsspiele, aufgenommen, wobei aus den Werten der Kurbelwellendrehzahlen n des jeweils gleichen Kurbelwellendrehwinkels im 720° Arbeitsspiel x ein Mittelwert gebildet wird. Dabei wird weiterhin die Einhaltung der Randbedingung stetig überwacht, wobei ein über- oder unterschreiten eines Schwellwertes einer Randbedingungen zu einem Neustart der automatischen Verdichtungsdedektion führt.

Als weitere Randbedingung kann dabei geprüft werden, ob die Abweichung der jeweils gleichen Werte im Arbeitsspiel x der Brennkraftmaschine einen applizierbaren Schwellwert nicht überschreitet.

Der Zylinder i mit dem größten Drehzahlhub Zᵢ wird bei der Auswertung durch das Steuergerät als der Zylinder i mit 100%-igem Verdichtungsdruck P_{zyl} betrachtet. Den anderen sieben Zylinder i der Brennkraftmaschine wird entsprechend ihrem Drehzahlhub Zᵢ eine darauf normierte Kennzahlen Kᵢ zwischen 0% und 100% zugeordnet. Der/die Zylinder i mit 100%-igem Drehzahlhub Zᵢ wird der maximale Verdichtungsdruck P_{zyl} des nominellen Verdichtungsverhältnisses der Brennkraftmaschine zugeordnet. Das nominelle Verdichtungsverhältnis der Brennkraftmaschine ist im Steuergerät gespeichert. Den anderen sieben Zylindern i wird der ihrer Kennzahl Kᵢ entsprechende, prozentuale Anteil des maximalen Verdichtungsdrucks P_{zyl} zugeordnet.

Bei der Anwendung des Verfahrens auf eine Brennkraftmaschine mit lediglich einem Zylinder i wird die ermittelte Kennzahl Kᵢ mit einer im Steuergerät gespeicherten Kennzahl Kᵢ des Zylinders i verglichen, die nach der Herstellung der Brennkraftmaschine ermittelt wurde.

Um die Genauigkeit der Auswertung weiter zu erhöhen können die ermittelten Kennzahlen Kᵢ der Zylinder i bezüglich den gemittelten Kurbelwellendrehzahlen n und bezüglich einer Motortemperatur, beispielsweise der Temperatur des Motoröls, korrigiert werden.

Dazu wird der Einfluß der gemittelten Kurbelwellendrehzahlen n und der Motortemperatur auf die Kennzahlen Ki bestimmt und diese als Kennlinie f_{(T)}, f₍ₙ₎ im Steuergerät abgelegt.

Eine weitere Einflußgröße, welche die korrekte Bestimmung der Kennzahlen Kᵢ der Zylinder i erschwert, sind Quereinflüsse zwischen den Zylindern i. Diese Quereinflüsse resultieren daher, daß ein Zylinder i mit einer geringeren Dichtigkeit bei der Expansion des verdichteten Gasgemisches die Kurbelwelle weniger stark beschleunigt als ein Zylinder i mit einer hohen Dichtigkeit. Dadurch weist der in der Zündfolge nächste Zylinder i auch bei 100%-iger Dichtigkeit einen geringeren Drehzahlhub Zᵢ auf. In der Figur 1 ist dieser Quereinfluß mit dem eine Undichtigkeit aufweisenden Zylinder i₌₃ und dem in der Zündfolge nächsten, 100% dichten Zylinder i₌₅ dargestellt. Während die Zylinder i_{=1,6,4,7,2,8} einen Drehzahlhub Zᵢ der Höhe ① aufweisen, der einem 100% dichtem Brennraum entspricht, weist der Zylinder i₌₃ eine Undichtigkeit auf und liefert lediglich einen Drehzahlhub Zᵢ der Höhe ②. Dadurch erfährt der in der Zündfolge nächste Zylinder i₌₅ eine geringere "Anschubwirkung" und zeigt trotz 100%iger Dichtigkeit einen Drehzahlhub Zᵢ der Höhe ③, der geringer ist als der Drehzahlhub Zᵢ der Höhe ① der 100% dichten Zylinder i.

Dabei haben Experimente gezeigt, daß es ausreicht die Korrektur lediglich auf den in der Zündfolge nächsten Zylinder i₊₁ anzuwenden. Der Einfluß auf den in der Zündfolge übernächsten Zylinder i₊₂ ist vernachlässigbar gering.

Ermittelt das Steuergerät bei der Dichtigkeitsprüfung der Brennräume eine Abweichung in den Kennzahlen Kᵢ der Zylinder i, die über einen applizierbaren Schwellwert hinaus geht, kann das auf der Steuerkonsole angezeigt und/oder gespeichert und zu Diagnosezwecken in einer Fachwerkstatt abgerufen werden. Gegebenenfalls kann das Steuergerät beim Auftreten einer Undichtigkeit eines Brennraumes die Motorsteuerung in geeigneter Weise anpassen, beispielsweise indem der betreffende Zylinder i geringer befeuert wird.

## Patentansprüche

1. Verfahren zur zylinderselektiven Dichtigkeitsprüfung der Brennräume einer Brennkraftmaschine, bei dem Motorwellendrehwinkel erfaßt und momentane Motorwellendrehzahlen während dem Motorbetrieb bei unterdrückter Verbrennung bestimmt werden, **gekennzeichnet durch** die zyklischen Verfahrensschritte:
• Bestimmen von dem Zylinder (i) zuzuordnenden Motorwellendrehzahldifferenzen (Zᵢ) aus dem Verlauf der momentanen Motorwellendrehzahlen,
• Bilden einer zur Höhe der Motorwellendrehzahldifferenz (Zᵢ) proportionalen Kennzahl (Kᵢ),
• Zuordnen der Kennzahl (Kᵢ) zu einem Wert des Verdichtungsdrucks (P_{zyl}),
• Vergleichen des Verdichtungsdrucks (P_{zyl}) mit einem vorgegebenen Schwellwert.

2. Verfahren nach Anspruch 1, **dadurch gekennzeichnet, daß** vor dem Erfassen der Motorwellendrehzahlen ein Prüfung von die Dichtigkeitsprüfung voraussetzenden Randbedingungen durchgeführt wird.

3. Verfahren nach Anspruch 1 oder 2, **dadurch gekennzeichnet, daß** zur Bestimmung der Motorwellendrehzahldifferenzen (Zᵢ) aus dem Verlauf der Motorwellendrehzahlen die Erhöhung der Motorwellendrehzahl nach dem oberen Totpunkt der Zylinders (i) genutzt wird.

4. Verfahren nach Anspruch 3, **dadurch gekennzeichnet, daß** die Motorwellendrehzahldifferenzen (Zᵢ) bestimmt werden, indem der Wert der maximalen Motorwellendrehzahl nach dem oberen Totpunkt eines Zylinders (i) minus der Motorwellendrehzahl direkt nach dem oberen Totpunkt des Zylinders (i) für jeden Zylinder (i) der Brennkraftmaschine gebildet wird.

5. Verfahren nach einem der vorangegangenen Ansprüche, **dadurch gekennzeichnet, daß** als Kennzahl (Kᵢ) eines Zylinders (i) der prozentuale Anteil der Motordrehzahldifferenz (Zᵢ) des Zylinders (i) in Bezug auf den Zylinder (i) mit der maximalen Motorwellendrehzahldifferenz (Zᵢ) verwendet wird.

6. Verfahren nach einem der vorangegangenen Ansprüche, **dadurch gekennzeichnet, daß** bei Bestimmung der Motorwellendrehzahl an endlich vielen Motorwellendrehwinkeln zwei benachbarte Motorwellendrehwinkel ein Drehwinkelsegment einschließen, und daß die resultierende Motorwellendrehzahl eines Motorwellendrehwinkels die mittlere Motorwellendrehzahl des Drehwinkelsegmentes darstellt, und daß die Motorwellendrehzahldifferenzen (Zᵢ) der Zylinder (i) bezüglich der mittleren Motorwellendrehzahlen der Drehwinkelsegmente entsprechend applizierbaren Kennlinien (f₍ₙ₎) korrigiert werden.

7. Verfahren nach einem der vorangegangenen Ansprüche, **dadurch gekennzeichnet, daß** die für jeden Zylinder bestimmten Motorwellendrehzahldifferenzen (Zᵢ) bezüglich einer Temperatur der Brennkraftmaschine entsprechend applizierbaren Kennlinien (f_{(T)}) korrigiert werden.

8. Verfahren nach einem der vorangegangenen Ansprüche, **dadurch gekennzeichnet, daß** bei Brennkraftmaschinen mit mehreren Zylindern (i) die Motorwellendrehzahldifferenz (Zᵢ) des in der Zündfolge nächsten Zylinders (i) in Abhängigkeit der Motorwellendrehzahldifferenz (Zᵢ) des in der Zündfolge letzten Zylinders (i) korrigiert wird.

9. Verfahren nach einem der vorangegangenen Ansprüche, **dadurch gekennzeichnet, daß** die Verdichtungsdrücke (P_{zyl}) der Zylinder (i) und/ oder die Motorwellendrehzahldifferenzen (Zᵢ) und/oder der Kennzahlen (Kᵢ) für Vergleichszwecke nach der Herstellung der Brennkraftmaschine, nach einer Reparatur oder nach beliebigen Intervallen gespeichert werden.

10. Verfahren nach einem der vorangegangenen Ansprüche, **dadurch gekennzeichnet, daß** Unregelmäßigkeiten bei den Verdichtungsdrücken (P_{zyl}) angezeigt werden.

11. Verfahren nach einem der vorangegangenen Ansprüche, **dadurch gekennzeichnet, daß** vor dem Beginn der Erfassung der momentanen Motorwellendrehzahlen die Brennkraftmaschine mindestens ein Arbeitsspiel (x) durchläuft.

12. Verfahren nach einem der vorangegangenen Ansprüche, **dadurch gekennzeichnet, daß** als Motorwellendrehzahlen die Kurbelwellendrehzahl (n), die Nockenwellendrehzahl oder die Anlasserwellendrehzahl verwendet wird.

13. Verfahren nach Anspruch 1, **dadurch gekennzeichnet, daß** das Verfahren bei Brennkraftmaschinen mit lediglich einem Zylinder (i) verwendet wird.
